Europäisches Patentamt

European Patent Office

Office européen des brevets

(11) Publication number: **0 267 287**
**A1**

# EUROPEAN PATENT APPLICATION
published in accordance with Art. 158(3) EPC

(21) Application number: 87902707.6

(22) Date of filing: 08.04.87

Data of the international application taken as a basis:

(86) International application number:
PCT/JP87/00216

(87) International publication number:
WO87/06164 (22.10.87 87/23)

(51) Int. Cl.³: **B 21 D 28/36**

(30) Priority: 08.04.86 JP 80869/86

(43) Date of publication of application:
18.05.88 Bulletin 88/20

(84) Designated Contracting States:
DE FR GB IT

(71) Applicant: FANUC LTD
3580, Shibokusa Aza-Komanba Oshino-mura
Minamitsuru-gun Yamanashi 401-05(JP)

(72) Inventor: ISOHATA, Shigeru
Furin-so 6 7-10-7, Tamadaira
Hino-shi Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) NUMERICALLY CONTROLLED PUNCH PRESS.

(57) Numerically controlled punch press which moves tools (55a to 55d) specified by a tool command according to a positioning command in X and Y directions relative to a work (53) to complete a positioning and conducts punch pressing. In said numerically controlled punch press, data indicating a punch pressing inhibiting region and tool shape data indicating a shape of each tool are stored in advance in memory (2). A processor (1) for numerical control checks in conducting punch pressing whether a specified tool conducts punch pressing within an inhibit region or not based on the tool shape data of the specified tool, command data of positioning, and data of a punch press inhibiting region, and when it determines that punch pressing will be conducted with in an inhibiting region, it inhibits punch pressing.

FIG. 1

-1-

## DESCRIPTION

NUMERICALLY CONTROLLED PUNCH PRESS MACHINE

Technical Field

This invention relates to a numerically controlled punch press machine and, more particularly, to a punch press machine capable of effectively inhibiting punch pressing by using a punch pressing inhibit area, tool shape data and a positioning command.

Background Art

Numerically controlled punch press machines in which a tool to be used (i.e. a punch) is designated by a tool command, the designated tool and a workpiece are moved relative to each other in accordance with a positioning command and punch pressing is performed in response to completion of positioning have been proposed and put into practical use in the art.

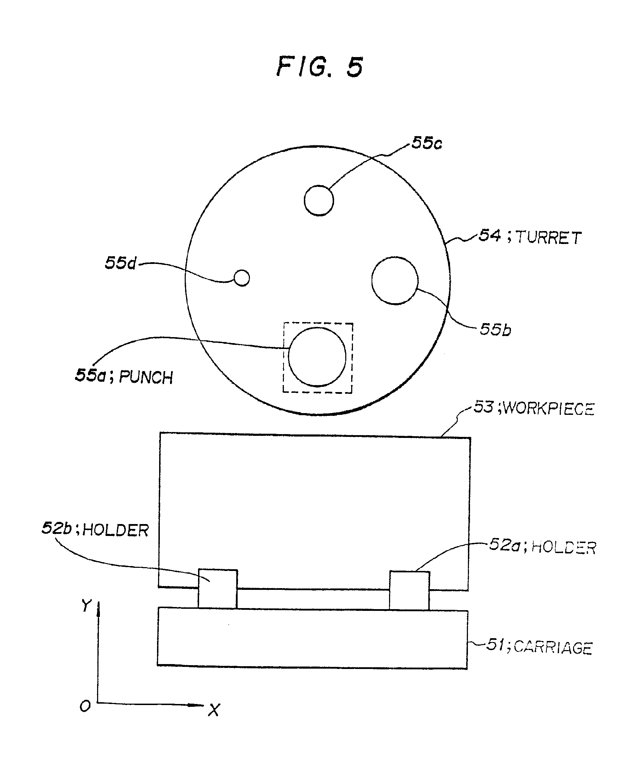

Fig. 5 is a schematic plan view illustrating an example of a conventional apparatus of this type, in which numeral 51 denotes a carriage which moves along X and Y axes in accordance with a positioning command, numerals 52a, 52b designate holders for holding a plate-shaped workpiece 53, and numeral 54 represents a turret in which a plurality of punches 55a - 55d are accommodated.

The turret 54 is rotated in response to application of a tool command to select one of the punches 55a - 55d. The carriage 51 is moved along the X and Y axes in response to application of the positioning command to position a prescribed portion of the workpiece directly below the selected punch, and punch pressing is carried out in response to completion of positioning. In order to prevent the holders 52a 52b from being damaged by the selected punch at this time, the conventional practice is to provide a limit switch at the position indicated by the dashed lines in Fig. 5 and it is arranged so that punch pressing will be inhibited if the holders 52a, 52b are sensed by the limit switch.

However, a problem is encountered in this method of inhibiting punch pressing. Specifically, in the prior-art example described above, the position at which the limit switch is arranged is decided upon considering a case in which the largest punch among the punches 55a - 55d is used. The problem that arises, therefore, is that in a case where a small punch is used, punch pressing is inhibited regardless of the fact that there is no risk of the holders 52a, 52b being damaged.

The present invention has been devised to solve the foregoing problem and its object is to perform optimum punch pressing inhibit processing commensurate with the shape of the tool used.

Disclosure of the Invention

In a numerically controlled punch press machine according to the present invention, a punch pressing inhibit region is decided in advance, it is determined whether a tool has entered the punch pressing inhibit region on the basis of tool shape data relating to the tool, which is designated by a tool command, and positioning data, and punch pressing is inhibited to prevent damage to holders if the tool has entered the punch pressing inhibit region. Optimum punch pressing inhibit processing conforming to the shape of the tool can be performed with this punch press machine.

Brief Description of the Drawings

Fig. 1 is a block diagram of an embodiment of the invention;

Fig. 2 is a flowchart illustrating the contents of processing performed by a microprocessor 1;

Fig. 3 is a view for describing the operation of Fig. 1;

Fig. 4 is an explanatory view illustrating another example of tool shape data; and

Fig. 5 is a schematic plan view illustrating an example of the prior art.

Best Mode for Carrying Out the Invention

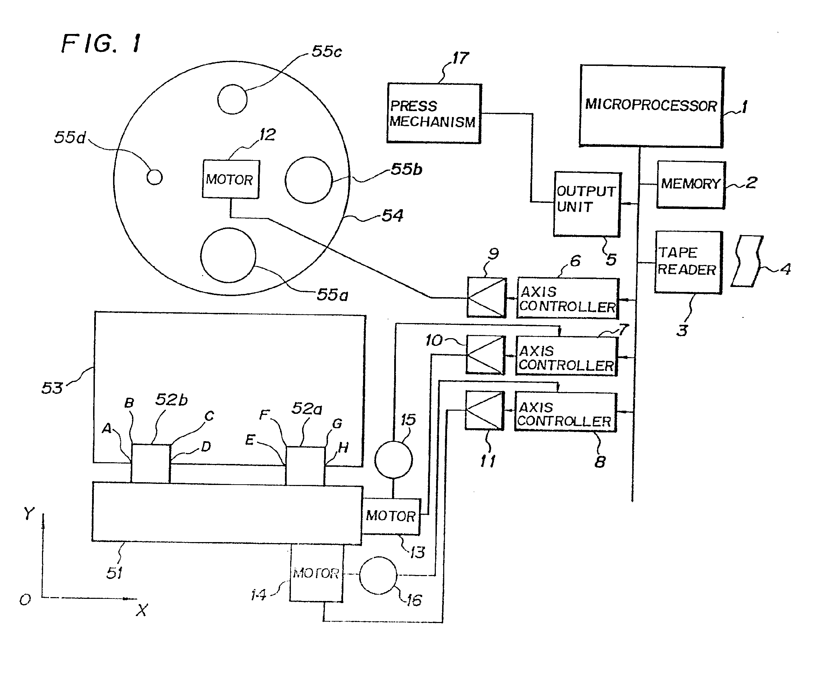

Fig. 1 is a block diagram of an embodiment of the present invention, in which numeral 1 denotes a microprocessor, 2 a memory which stores data for specifing a punch pressing inhibit region and tool data indicative of tool shape, 3 a tape reader, 4 an NC command tape, 5 an output unit, 6 - 8 axis controllers, 9 - 11 drive circuits, 12 - 14 motors, 15 and 16 position sensors for outputting position feedback pulses, and 17 a press mechanism. Other portions identical with those in Fig. 5 are designated by like reference characters. In this case, the memory 2 stores X and Y coordinates of points A through H as data indicative of a punch pressing inhibit region, and values that are slightly larger than the radii of punches 55a - 55d as tool data.

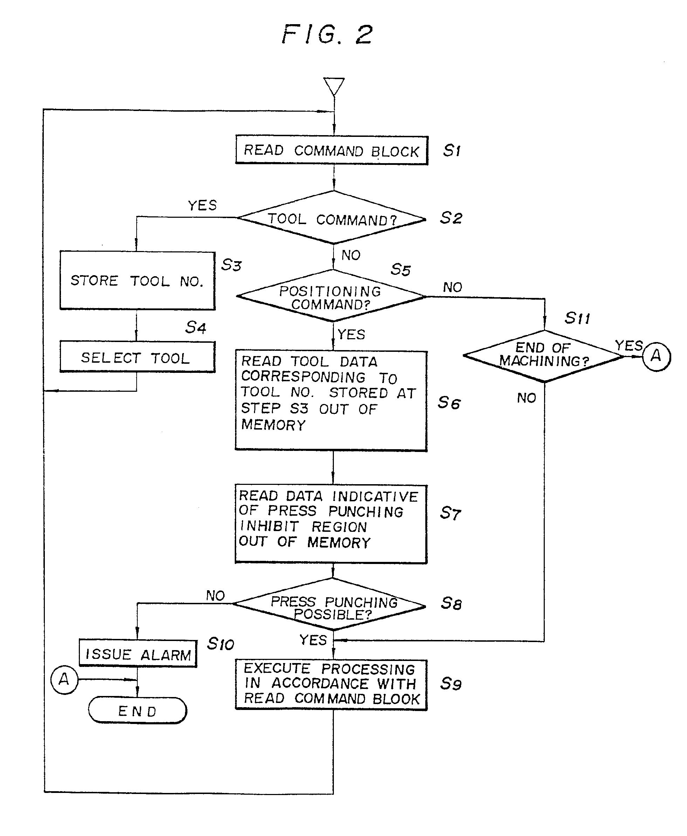

Fig. 2 is a flowchart illustrating the contents of processing performed by the microprocessor 1. The overall operation of Fig. 1 will now be described with reference to Fig. 2.

When the start of machining is designated, the microprocessor 1 first reads one block of command blocks recorded on the command tape 4 (step S1). In this case, it is assumed that at least a tool command having the following form (a) and a positioning command having the following form (b) are recorded on the command tape 4:

$$T\underline{tn}; \quad \ldots (a)$$
$$G00X\underline{xn} \ Y\underline{yn}; \quad \ldots (b)$$

In the tool command, tn indicates a tool number. In the positioning command, xn, yn indicate X and Y coordinates of a position at which punch pressing is performed.

Next, the microprocessor 1 determines whether the read command block is a tool command (step S2). If it is determined that the command block is a tool command, then the microprocessor 1 first stores the tool number

of the tool co......ed by the tool command in the memory
2 (step S3), then performs tool selection (step S4) and
thereafter returns to the processing of step S1. It
should be noted that tool selection is accomplished by
driving the motor 12 to rotate the turret 54.

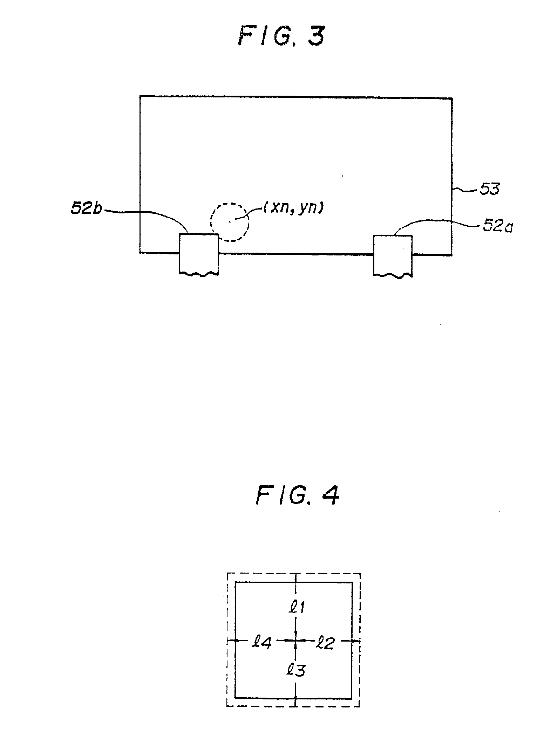

If the result of the decision at step S2 is NO,
then the microprocessor 1 determines whether the
command block read at step S1 is a positioning command
(step S5). If it is determined that the command block
is a positioning command, then the microprocessor 1
reads the tool data corresponding to the tool number
stored at step S3 out of the memory 2 (step S6), reads
the data indicative of the punch pressing inhibit
region out of the memory 2 (step S7), then determines
(step S8), on the basis of the data read out of memory
2 at steps S6, S7 and the positioning command read at
step S1, whether it is possible to perform punch
pressing without damaging the holders 52a, 52b. That
is, as shown in Fig. 3, it is determined at step S8
whether the tool (illustrated by the dashed line in
Fig. 3) expressed by the tool data stored in memory 2
will reach the holders 52a, 52b if the tool is
positioned at the position commanded by the tool
positoning command.

If it is determined at step S8 that punch pressing
is possible, the motors 13, 14 are driven to perform
positioning, a pressing command for the pressing
mechanism is applied via the output unit in response to the completion of positioning, and punch pressing is carried out (step S9). If punch pressing is determined to be impossible at step S8, the microprocessor 1 issues an alarm (step S10) and then ends processing.

Further, if the result of the decision at step S5 is NO, then the microprocessor 1 determines whether the command block read at step S1 is a command block that designates the end of machining (step S11). If the decision rendered here is NO, then the program returns to the processing of step S9; if the decision is YES, then processing is ended.

In the above-described embodiment, values slightly larger than the radii of tools are stored in memory 2 as the tool data. However, the invention is not limited to this arrangement. For example, if a tool has a rectangular shape, as shown in Fig. 4, lengths 11 through 14, which are slightly greater than the distances from the center of the tool to each of its sides, can be stored in the memory 2 as the tool data.

Thus, in accordance with the present invention as described above, punch pressing inhibit processing is performed on the basis of tool shape data, positioning command data and data indicative of a punch pressing inhibit region. This is advantageous in that optimum punch pressing inhibit processing conforming to the shape of a tool can be carried out.

CLAIMS:

1. A numerically controlled punch press machine for moving tools designated by a tool command relative to a workpiece in response to a positioning command, and performing punch pressing in response to completion of positioning, characterized by comprising:

a memory in which data indicative of a punch pressing inhibit region and tool shape data indicative of the shapes of said tools are stored;

determination means for determining, on the basis of tool shape data corresponding to the shape of a tool designated by said tool command, said positioning command data and data indicative of said punch pressing inhibit region, whether said tool will perform punch pressing within said punch pressing inhibit region at the time of punch pressing; and

punch pressing inhibiting means for inhibiting punch pressing when said determination means determines that said tool will perform punch pressing within said punch pressing inhibit region.

2. A numerically controlled punch press machine according to claim 1, characterized in that a tool shapes slightly larger than actual tool shape dimensions are stored in said memory as said tool shapes.

3. A numerically controlled punch press machine according to claim 2, characterized in that said determination means determines whether said punch pressing inhibit region and a planar configuration of a commanded tool positioned relative to the workpiece overlap, and if they do overlap, determines that the interior of the punch pressing inhibit region will be punch pressed.

4. A numerically controlled punch press machine according to claim 3, characterized in that said determination is made before the commanded tool actually is positioned relative to the workpiece.

5. A numerically controlled punch press machine according to claim 1, characterized in that said punch pressing inhibit region is a region occupied by a workpiece holder.

# FIG. 1

MICROPROCESSOR /1

PRESS MECHANISM 17

MEMORY 2

OUTPUT UNIT 5

TAPE READER 3

4

AXIS CONTROLLER 6

9

AXIS CONTROLLER 7

10

AXIS CONTROLLER 8

11

MOTOR 12

55c

55d

55b

54

55a

15

MOTOR 13

MOTOR 14

16

53

A B 52b C D

E F 52a G H

51

Y

O X

# FIG. 2

READ COMMAND BLOCK — S1

TOOL COMMAND? — S2

YES → STORE TOOL NO. — S3 → SELECT TOOL — S4

NO

POSITIONING COMMAND? — S5

NO → END OF MACHINING? — S11 — YES → (A)

NO

YES

READ TOOL DATA CORRESPONDING TO TOOL NO. STORED AT STEP S3 OUT OF MEMORY — S6

READ DATA INDICATIVE OF PRESS PUNCHING INHIBIT REGION OUT OF MEMORY — S7

PRESS PUNCHING POSSIBLE? — S8

NO → ISSUE ALARM — S10 → END

(A)

YES

EXECUTE PROCESSING IN ACCORDANCE WITH READ COMMAND BLOOK — S9

## FIG. 3

$52b$ — $(xn, yn)$

— $53$

— $52a$

## FIG. 4

$\ell 1$

$\ell 4$ — $\ell 2$

$\ell 3$

0267287

## FIG. 5

55c

54 ; TURRET

55d

55b

55a ; PUNCH

53 ; WORKPIECE

52b ; HOLDER

52a ; HOLDER

Y

51 ; CARRIAGE

O → X

# INTERNATIONAL SEARCH REPORT

International Application No **PCT/JP87/00216**

## I. CLASSIFICATION OF SUBJECT MATTER (if several classification symbols apply, indicate all) 3

According to International Patent Classification (IPC) or to both National Classification and IPC

Int.Cl$^4$   B21D28/36

## II. FIELDS SEARCHED

Minimum Documentation Searched 4

| Classification System | Classification Symbols |
|---|---|
| IPC | B21D28/36 |

Documentation Searched other than Minimum Documentation
to the Extent that such Documents are Included in the Fields Searched 5

| | |
|---|---|
| Jitsuyo Shinan Koho | 1926 - 1987 |
| Kokai Jitsuyo Shinan Koho | 1971 - 1987 |

## III. DOCUMENTS CONSIDERED TO BE RELEVANT 14

| Category ° | Citation of Document, 16 with indication, where appropriate, of the relevant passages 17 | Relevant to Claim No. 18 |
|---|---|---|
| Y | JP, A, 57-70031 (Amada Co., Ltd.) 30 April 1982 (30. 04. 82) (Family: none) | 1-5 |
| Y | JP, A, 57-83318 (Murata Machinery Ltd.) 25 May 1982 (25. 05. 82) (Family: none) | 1-5 |

* Special categories of cited documents: 15

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search 2 | Date of Mailing of this International Search Report 2 |
|---|---|
| May 11, 1987 (11. 05. 87) | May 25, 1987 (25. 05. 87) |
| International Searching Authority 1 | Signature of Authorized Officer 20 |
| Japanese Patent Office | |

Form PCT/ISA/210 (second sheet) (October 1977)